(19) Europäisches Patentamt
European Patent Office
Office européen des brevets

(11) **EP 3 761 285 A1**

(12) # EUROPEAN PATENT APPLICATION

(43) Date of publication:
**06.01.2021 Bulletin 2021/01**

(21) Application number: **19183734.3**

(22) Date of filing: **01.07.2019**

(51) Int Cl.:
*G08G 1/01* (2006.01)   *G08G 1/09* (2006.01)
*G08G 1/16* (2006.01)   *B60W 30/095* (2012.01)
*G08G 1/0967* (2006.01)   *G05D 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kanagawa, 211-8588 (JP)**

(72) Inventors:
• **CHATON, Thomas**
**Southall, Middlesex UB1 3JA (GB)**

• **JABER, Mona**
**London, WC1A 2JR (GB)**
• **NASEER BUTT, Aisha**
**Hayes, Middlesex UB4 8LB (GB)**

(74) Representative: **Haseltine Lake Kempner LLP**
**138 Cheapside**
**London EC2V 6BJ (GB)**

Remarks:
Amended claims in accordance with Rule 137(2) EPC.

(54) **SMART OBJECT KNOWLEDGE SHARING**

(57) Embodiments include a method comprising, at a computing apparatus: receiving first sensor data from one or more sensors provided by a first sensing object, the first sensing object being an autonomous or partially autonomous mobile object, the mobile object having wireless connectivity, the first sensor data representing a state of an entity in the physical domain; receiving second sensor data from one or more sensors provided by a second sensing object, the second sensing object being distinct from the first sensing object, the second sensor data representing the state of the entity in the physical domain; merging the first sensor data and the second sensor data to generate an augmented dataset representing the state of the entity; transmitting an excerpt of the augmented dataset to the mobile object, the excerpt being a selected subset of the augmented dataset, the selected subset being selected by the computing apparatus in dependence upon the identity or location of the mobile object.

FIG. 1

EP 3 761 285 A1

**Description**

This invention is in the field of smart object networking. In particular, embodiments relate to autonomous vehicle perception of the physical domain.

INTRODUCTION

A single smart object's awareness of its surroundings will always be limited to its immediate vicinity and lines of sight, and constrained by available sensors or processors. Consequently, the social acceptance of fully automated objects, in view of their limited perception, may not be possible.

Present techniques for coordination among smart objects are limited to smart objects of the same type, and suffer from problems associated with inefficiency and latency.

The recent advancement in smart connected objects as being decision making entities has raised the fundamental challenge of creating a reliable environment. This is particularly evident in the domain of autonomous vehicles, whereby a vehicle has to perceive and interpret its local environment in order to execute reactive and predictive control actions. Autonomous vehicles have to perform extremely complex tasks such as Object Tracking to create the perception of the surroundings and determination of other objects' trajectories. Recently, great progress has been made in the field of advanced sensors with the 3D Lidar introduction, which is the most commonly used technology for object tracking or in computer vision/machine learning. Convolutional Neural Networks (CNN) have been successfully applied to autonomous driving tasks, mainly in an end to-end manner. Previous end-to-end steering control methods take an image or an image sequence as the input and directly predict the steering angle with CNN. Indeed, single task learning on steering angles has reported good performances. However, since it is nontrivial to predict accurate speed values with only visual inputs, a single mistake could be catastrophic.

In a smart connected object, the knowledge acquired may be inferred from one or multiple sensors belonging to the same object. These sensors are purposed to perceive the surrounding of the object they serve (e.g., lamp post, traffic light, CCTV, vehicle, etc.) and may be composed of cameras, sonar, LIDAR, radar, or other sensors. Embodiments seek to improve the quality of sensor data available to the smart connected object for decision making.

Embodiments provide an efficient mechanism for the sharing of relevant information between smart objects in a network and the augmenting of information from a particular smart object with information from other smart objects.

STATEMENTS

Embodiments include: a method comprising, at a computing apparatus: receiving first sensor data from one or more sensors provided by a first sensing object, the first sensing object being an autonomous or partially autonomous mobile object, the mobile object having wireless connectivity, the first sensor data representing a state of an entity in the physical domain; receiving second sensor data from one or more sensors provided by a second sensing object, the second sensing object being distinct from the first sensing object, the second sensor data representing the state of the entity in the physical domain; merging the first sensor data and the second sensor data to generate an augmented dataset representing the state of the entity; transmitting an excerpt of the augmented dataset to the mobile object, the excerpt being a selected subset of the augmented dataset, the selected subset being selected by the computing apparatus in dependence upon the identity or location of the mobile object.

Optionally, the entity state is location information of one or more objects, and, for example, the entity may be a space inhabited by said one or more objects.

Optionally, the mobile object is a vehicle. The mobile object, whether a vehicle or otherwise, being either autonomous, or semi-autonomous and operating in an autonomous mode, may be configured to make decisions regarding a motion path of the mobile object in accordance with instruction from the computing apparatus, or regarding some other autonomously controlled actuation, in accordance with instruction from the computing apparatus. The mobile object may be a Smart Connected Thing, or SCoT. The mobile object may be a drone, a maritime vessel, a miniaturised drone, a medical device, a medical device in contact with or inside a body of a subject (person or animal).

The object being autonomous or semi-autonomous is taken to mean it comprises one or more actuators that it is operable to control. The control is in accordance with an instruction from the computing apparatus. Semi-autonomous is taken to mean the actuator may be operated in a manual or autonomous mode. The actuator may be, for example, the means to drive a car or other vehicle.

Optionally, the first sensor data represents location information of a first set of one or more objects in the physical domain. Optionally, the second sensor data represents location information of a second set of one or more objects in the physical domain. The first set may be overlapping with, identical to, or mutually exclusive of, the second set (in terms of membership, not in terms of information). The first set may be a subset or a superset of the second set (in terms of membership, not in terms of information).

The augmented dataset is augmented in comparison to either the first sensor data as a dataset or the second sensor data as a dataset. The augmented dataset may be referred to as a augmented dataset.

Merging the first and second sensor data may include triangulating the information about the same entity state (i.e. physical property or other concept represented by the data) from the two data sets. The merging may include discarding some data about an entity state from one or the other (or both) datasets. The merging may include extracting information about an entity state from one or the other (or both) datasets. The merging may include combining information about different phenomena from the two datasets so that in the augmented dataset all entity states are represented. An entity state in this context is taken to include one or more from among: a phenomenon, a physical property of an object in the physical domain, a physical property of the physical domain, a status of the physical domain, a physical entity, a physical property, a physical property of an object, a physical property of the environment, a state of a spatial region containing plural objects. The merging may include triangulating, wherein triangulation may mean using more than one method to collect data on the same topic. Triangulation is not necessarily to cross-validate data but rather to capture different dimensions of the same phenomenon (entity state).

Optionally, the augmented dataset representing the state of the entity may be an augmented dataset representing location information of a union of a first set of objects, whose location information is represented by the first sensor data, and a second set of objects, whose location information is represented by the second sensor data. The first set may be overlapping with, identical to, or mutually exclusive of, the second set (in terms of membership, not in terms of information). The first set may be a subset or a superset of the second set (in terms of membership, not in terms of information).

Optionally, the excerpt is the representation of location information from the augmented dataset of a selected subset of the union of the first set of objects and the second set of objects, the selected subset being objects for which the represented location is within a first spatial region defined relative to a location of the vehicle

An exemplary embodiment is a method comprising, at a computing apparatus: receiving first sensor data from one or more sensors provided by a first sensing object, the first sensing object being an autonomous or partially autonomous vehicle, the first sensor data representing location information of a first set of one or more objects external to the vehicle in the physical domain; receiving second sensor data from one or more sensors provided by a second sensing object, the second sensing object being distinct from the first sensing object, the second sensor data representing location information of a second set of one or more objects in the physical domain; merging the first sensor data and the second sensor data to generate an augmented dataset representing location information of a union of the first set of objects and the second set of objects; transmitting an excerpt of the augmented dataset to the vehicle, the excerpt being the representation of location information from the augmented dataset of a selected subset of the union of the first set of objects and the second set of objects, the selected subset being objects for which the represented location is within a first spatial region defined relative to a location of the vehicle.

The merging and transmitting steps serve to augment the first sensor data with the second sensor data to provide the vehicle with location information about objects in the physical domain that is more accurate (i.e. smaller uncertainty), and/or more comprehensive (i.e. representing more objects), than the location information that would be available to the vehicle from data generated by its own sensors only (i.e. the first sensor data). Decision making capability of the vehicle is improved by virtue of the more accurate and/or more comprehensive information (such as 360 view about other objects around/or in the vicinity).

Embodiments provide a knowledge based triangulation method enabling collaborative intelligence between smart objects. In other words, sensor data from a first sensing object is triangulated with sensor data from one or more other sensing objects to improve the location information available to the first sensing object for decision making. A sensing object is a smart object equipped with sensors that enable a virtual perception of the surrounding physical domain. The sensing object is embedded with a processor and connectivity that enhance its interaction with other smart objects. Smart objects with connectivity are known as smart connected products or Smart Connected Things (SCoT), the vehicle being exemplary thereof.

The method exploits knowledge shared by multiple sensing objects to generate augmented knowledge or collaborative intelligence. Augmented knowledge can take the form of improved confidence, increased accuracy, complemented visibility, etc. Embodiments allow sensing objects with diverse levels of awareness of their surroundings to engage in collective intelligence in real time which builds on shared knowledge from a group of sensing objects and redistributes tailor-made reinforcement information to enable object-centric augmented knowledge to be transmitted to the vehicle for enhanced decision making.

Embodiments augment the limited object-centric visibility of the vehicle by means of collective knowledge (augmented dataset) from surrounding connected sensing objects which may, for example, capture different dimensions of the data. The collective knowledge is obtained by a computing apparatus, which may be at the network edge, extracting an excerpt of the augmented dataset for sharing with the vehicle over the wireless network, thereby achieving improved efficiency and latency. Furthermore, the control of the triangulation (a type of merging) mechanism allows for augmented knowledge tailored to the subject vehicle. Such augmented knowledge could be augmented in terms of increased confidence and/or accuracy in object positioning, classification, and could be compensation for a blind spot.

Each sensing object (i.e. first object or second object) that is participating in the knowledge sharing may have very confident and accurate information about a given angle but limited or unreliable knowledge about other angles. On the other hand, a defect (accidental or intentional) in a sensing object's functionality (sensor hardware, software, classification algorithm, and/or communication module) may result in faulty knowledge shared with other "healthy" sensing objects, creating a confusion or blurring threat. Embodiments enable sensing objects with diverse levels of awareness to engage in collective intelligence whereby each of them shares its knowledge and receives reinforcement information from other sensing objects to improve its perception.

Optionally, the selected subset comprises an object that is a member of the second set of objects and is not a member of the first set of objects.

Advantageously, such embodiments serve to inform the first sensing object of location information of an object in the physical domain about which the first sensing object was not previously aware. That is, the embodiment fills in a blind spot in the first sensor data with information from the second sensor data.

Optionally, the excerpt of the augmented dataset includes a representation of an object that is a member of both the first set of objects and the second set of objects, the representation in the augmented dataset including location information from the representation of the object in the first sensor data augmented with location information from the representation of the object in the second sensor data.

Location information is represented by the sensor data. Combining location information about the same object from two data sources provides a more accurate or more complete representation of the actual location information. Embodiments leverage sensor data from sensors other than those mounted to the vehicle in order to augment the sensor data from the vehicle's own sensors, and to share the augmented data back to the vehicle in a bandwidth efficient manner.

Optionally, merging the first sensor data and the second sensor data comprises comparing the representation of each member of the first set of objects in the first sensor data with the representations of each member of the second set of objects in the second sensor data, to identify members of the first set of objects that also belong to the second set of objects; and for each object belonging to both the first set of objects and the second set of objects, generating a representation of the location information of the object in the augmented dataset by combining the representation of the location information of the object in the first sensor data with the representation of the location information of the object in the second sensor data.

Embodiments compare representations of objects from multiple data sources to identify when the same object from the physical domain is represented in sensor data from plural sources. For example, a preliminary comparison may identify potential matches, wherein potential matches are subjected to a more detailed comparison (i.e. based on more properties including, for example, metadata such as object recognition outcomes) to give a positive or negative assessment of the potential match.

Optionally, the representation of location information of objects in the first sensor data includes an indication of the accuracy of the representation of the location information; the representation of location information of objects in the second sensor data includes an indication of the accuracy of the representation of the location information; the representation of location information of objects in the augmented data includes an indication of the accuracy of the representation of the location information; the representation of location information in the augmented dataset of the or each object belonging to both the first set of objects and the second set of objects generated by combining the representation of the location information of the object in the first sensor data with the representation of the location information of the object in the second sensor data, is of a higher accuracy than the accuracy of the representation of the location information of the said object in the first sensor data and the second sensor data. Alternatively or additionally, the representation of location information may include an indication of the confidence of the representation of the location information (for one or more of the first sensor data, the second sensor data, and the augmented data). In which case, the confidence of the augmented data is increased relative to that of the first and second sensor data.

Optionally, embodiments may only select the combined representation for the augmented dataset on condition that it is more accurate (or higher confidence) than the first sensor data, and otherwise simply use the representation from the first sensor data.

Optionally, the indication of the accuracy of the representation of the location information of each object in the first sensor data includes a distribution of probability over object location; the indication of the accuracy of the representation of the location information of each object in the second sensor data includes a distribution of probability over object location; and, the combining the representation of the location information of the object in the first sensor data with the representation of the location information of the object in the second sensor data includes superimposing the distributions of probability over object location for the said object from the first sensor data and second sensor data.

The distribution of probability over object location is a probability density function of object location over space, optionally, over a 2D space along the plane of the ground. Superimposing may identify an overlap of the two distributions, with the object location in the combined representation being at the centre of the overlap. Advantageously, the combination of distributions by superimposing yields a representation of object location that is based on the estimated positions from both the first sensor data and second sensor data, and is therefore more accurate.

Optionally, the state of the entity or the representation of the location information of each object in the first sensor data, second sensor data, and augmented dataset, includes a representation of object location, and/or a representation of object velocity, and/or a representation of object acceleration.

The location information may be simply a representation of object location. In addition, other location-based properties such as rate of change of location (i.e. velocity), and the rate of change of said rate of change (i.e. acceleration) may also be represented. Advantageously, representation of velocity and/or acceleration help a controller to predict where an object will move in the future, which enables a motion path to be determined which minimises risk of collision.

Optionally, methods may include, at the mobile object, receiving and using the excerpt of the augmented dataset to control an actuator initiating a functional change in the mobile object.

For example, the functional change may be a motion path for the vehicle. The vehicle is equipped with a vehicle control device for autonomous driving, including algorithms which determine a motion path (i.e. direction and speed of motion) of the vehicle based on the location of physical objects, with an objective function being to determine and follow a motion path that avoids collisions with said physical objects. Advantageously, embodiments enhance the ability of said algorithms to avoid collisions by providing a representation of location information of physical objects that is more accurate and/or more comprehensive than that which could be obtained from the vehicle sensors alone.

Embodiments may standardise the format of the knowledge that is shared by various smart objects while keeping the flexibility of populating the content in a object-centric fashion. The format may be referred to as a KT format, or a knowledge transfer format.

Embodiments of another aspect include: a computing apparatus comprising processor hardware, memory hardware, and a data communication interface, and configured to perform a method comprising: receiving first sensor data from one or more sensors provided by a first sensing object, the first sensing object being an autonomous or partially autonomous mobile object, the mobile object having wireless connectivity, the first sensor data representing a state of an entity in the physical domain; receiving second sensor data from one or more sensors provided by a second sensing object, the second sensing object being distinct from the first sensing object, the second sensor data representing the state of the entity in the physical domain; merging the first sensor data and the second sensor data to generate an augmented dataset representing the state of the entity; transmitting an excerpt of the augmented dataset to the mobile object, the excerpt being a selected subset of the augmented dataset, the selected subset being selected by the computing apparatus in dependence upon the identity or location of the mobile object.

The system may also include one or more from among the first sensing object and the second sensing object. The sensing objects may be smart objects and may be smart connected things.

Embodiments of another aspect include: a computer program comprising processing instructions which, when executed by a computing apparatus having processor hardware and memory hardware, cause the computing apparatus to perform a method according to a method described above or another method embodiment.

Embodiments of another aspect include a method comprising, at a computing apparatus: receiving first sensor data from one or more sensors provided by a first sensing object, the first sensing object being an autonomous or partially autonomous vehicle, the first sensor data representing location information of a first set of one or more objects external to the vehicle in the physical domain; receiving second sensor data from one or sensors provided by a second sensing object, the second sensing object being distinct from the first sensing object, the sensor data representing location information of a second set of one or more objects in the physical domain; merging the first sensor data and the second sensor data to generate an augmented dataset representing location information of a union of the first set of objects and the second set of objects; transmitting an excerpt of the augmented dataset to the vehicle, the excerpt being the representation of location information from the augmented dataset of a selected subset of the union of the first set of objects and the second set of objects, the selected subset being objects for which the represented location is within a first spatial region defined relative to a location of the vehicle.

Embodiments of another aspect include a computing apparatus comprising processor hardware, memory hardware, and a data communication interface, and configured to perform a method comprising: receiving, via the data communication interface, first sensor data from one or more sensors provided by a first sensing object, the first sensing object being an autonomous or partially autonomous vehicle, the first sensor data representing location information of a first set of one or more objects external to the vehicle in the physical domain; receiving, via the data communication interface, second sensor data from one or sensors provided by a second sensing object, the second sensing object being distinct from the first sensing object, the sensor data representing location information of a second set of one or more objects in the physical domain; merging the first sensor data and the second sensor data to generate a augmented dataset representing location information of a union of the first set of objects and the second set of objects; transmitting, via the data communication interface, an excerpt of the augmented dataset to the vehicle, the excerpt being the representation of location information from the augmented dataset of a selected subset of the union of the first set of objects and the second set of objects, the selected subset being objects for which the represented location is within a first spatial region defined relative to a location of the vehicle.

DETAILED DESCRIPTION

A detailed description will now be provided, purely by way of example, with reference to the following drawings, in which:

Figure 1 illustrates a method of an embodiment;
Figure 2 illustrates a hardware configuration of an embodiment;
Figure 3 illustrates a network of connected objects according to an embodiment;
Figure 4 illustrates an example of a vehicle control device;
Figure 5 illustrates an embodiment;
Figure 6 illustrates an exemplary process that may be performed by the subject vehicle;
Figure 7 illustrates a physical domain scenario in which an embodiment is implemented;
Figure 8 illustrates the vision field of a vehicle;
Figure 9 illustrates sensor data;
Figure 10 illustrates merging sensor data by superimposing probability density functions;
Figure 11 illustrates sensors and functional modules of a vehicle control device;
Figure 12 illustrates a computing apparatus.

Embodiments leverage multiple sensing objects in a network producing sensor data in a standardised format for real-time data sharing in the network. The data from individual sensing objects are merged and analysed at a central or local computing apparatus for the purpose of accuracy improvement, credibility improvement, redundancy elimination, etc. Once the augmented data has been analysed, an object-centric excerpt is extracted and transmitted to the or each autonomous object requiring data for decision making.

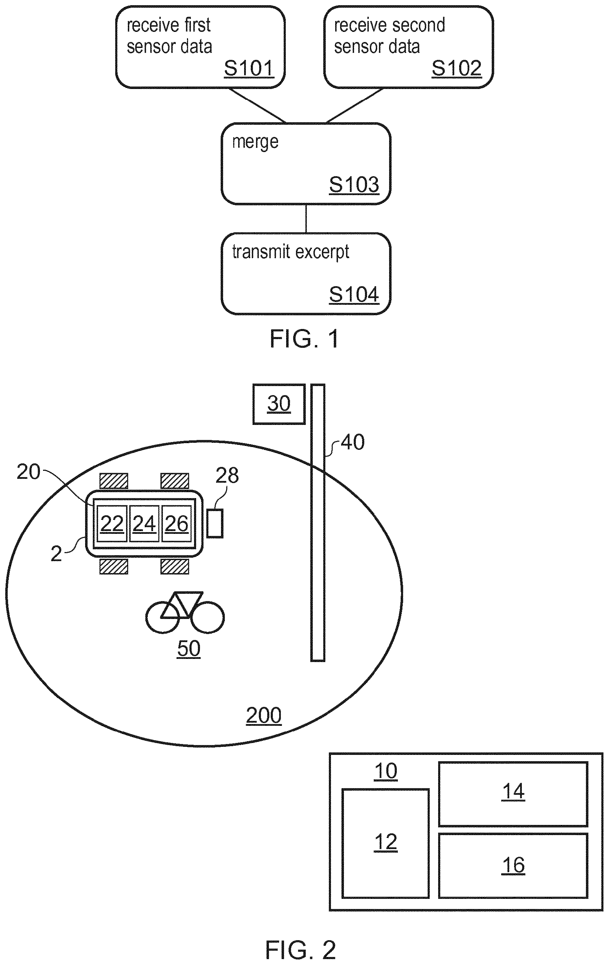

Figure 1 illustrates a method in accordance with an embodiment. The embodiment may be the method itself, a program which causes computing hardware to perform the method when executed, or apparatus operable to perform the method. The method comprises four steps S101 to S104. With respect to sensor data representing a particular time instance, the receiving steps S101 and S102 are performed before the merge step S103, and the merge step S103 is performed before the transmission step S104. The method is executed in a repeated manner, so that sensor data representing a current time instance may be received whilst sensor data representing a preceding time instance is being merged S103 and transmitted S104.

Figure 2 illustrates a hardware configuration of an embodiment. The embodiment includes a computing apparatus 10 comprising a processor 12, a memory 14, and a communication interface 16. The remaining hardware may form part of the embodiment, or may be hardware separate from the embodiment but communicatively coupled to one or more entities included in the embodiment. The remaining hardware includes a stationary sensor 30, an object to which the sensor is mounted 40, a vehicle 2, and a vehicle control device 20. The computing apparatus 10 may be a cloud server or an edge server or a fog server. The computing apparatus 10 may be stationary, that is, mounted to a stationary object, or housed in a building. The computing apparatus 10 may perform the method of steps S101 to S104 on behalf of a plurality of vehicles 2 during a residence time of said vehicles in a particular physical domain 200 (i.e. specific range of locations) as an on-demand service.

In the example of Figure 2, the mobile object is a vehicle. It is noted that the mobile object may be a satellite, a smart connected object (SCoT), whether an SCoT or otherwise, the mobile object may be a satellite, vehicle, for example, a car, a truck, a van, a lorry, a motorcycle, a bicycle, a cart, a trolley, a robot, a ship, a drone, a miniaturised drone, a delivery robot, a smart mobile object, a smart mobile object configured for connection to a carrier, a smart mobile object configured for connection to a live or living carrier, a smart connected thing (SCoT), a miniaturised smart connected thing. An SCoT is an object with connectivity allowing data to be exchanged with computing apparatus, for example, the first computing apparatus 10, as part of a computing network. An SCoT may be embedded with one or more from among processors, sensors, and software. An SCoT may also be but is not limited to a drone, a maritime vessel, or delivery robot. In any of the examples provided, the mobile object may be miniaturised.

The physical domain 200 may be observed by a stationary sensor 30, which may be part of an embodiment, or may be external to the embodiment but communicatively coupled to a computing apparatus 10 of an embodiment. The stationary sensor 30 is configured to provide realtime sensor data representing location information of objects in the physical domain 200 to the computing apparatus 10. The stationary sensor 30 may be, for example, a LIDAR, a RADAR, or a camera. The stationary sensor 30 may be fixed to a building, or mounted on, for example, a pole 40 or some other object. The pole is exemplary of a stationary physical object 40 within the physical domain. The physical domain 200 is also occupied by a dynamic physical object 50, for example, a cyclist riding a bicycle. The sensor 30 either in combination with the object 40 to which it is mounted, or on its own, may be considered a sensing object, exemplary of the second sensing object.

The method may be executed, for example, by a computing apparatus 10, which may be a server with a data communication link to the subject vehicle, as a first sensing object, and to the one or more second sensing objects. The data communication link between the server 10 and the sensing objects may be a one-hop wireless link, or a two-hop, or three-hop wireless link. The data communication between the server 10 and the sensing objects may be a combination of a wireless link between the mobile object 2 and an access point, and one or more wired or wireless connections between the access point and the computing apparatus 10. The computing apparatus 10 performing steps S101 to S104 may provide, or have a direct wired connection to, the access point in wireless communication with the sensing objects. Sensing objects is used as a collective term encompassing the mobile object 2 as a first sensing object, and second sensing objects such as the stationary sensor 30, which provide second sensor data and are distinct from the first sensing object. It is noted that designation as a first sensing object and second sensing object is subjective, wherein, the mobile object 2 to which the excerpt of the augmented dataset is transmitted in S104 is the first sensing object in the method. However, the same vehicle may perform the function of second sensing object in the context of the generation and transmission of an excerpt of augmented data to another vehicle. A second sensing object is any object in the network and provided with sensors that generate location information about objects in the physical domain of the first sensing object 2.

At step S101 first sensor data is received by the computing apparatus 10. Step S101 may comprise, for example, receiving first sensor data from one or more sensors provided by a first sensing object, the first sensing object being an autonomous or partially autonomous mobile object, the mobile object having wireless connectivity, the first sensor data representing a state of an entity in the physical domain.

In a particular example relating to controlling an autonomous vehicle, step S101 may comprise receiving first sensor data from one or more sensors provided by a first sensing object, the first sensing object being an autonomous or partially autonomous vehicle 2, the first sensor data representing location information of a first set of one or more objects external to the vehicle in the physical domain 200.

The vehicle 2, which may be referred as the subject vehicle, is drivable in an autonomous or partially-autonomous mode by a vehicle control device 20. The vehicle control device 20 may include a vehicle control device processor 22, a vehicle control device memory 24, and a vehicle control device communication interface 26. One or more sensors 28 may be mounted on the vehicle 20, providing realtime sensor data representing location information of objects within the physical domain 200 to the computing apparatus 10 via the vehicle control device communication interface 26 and the computing apparatus communication interface 16. The or each of the vehicle mounted sensors 28 may be a LIDAR, a RADAR, or a camera. The data provided by the vehicle-mounted sensors 28 is exemplary of first sensor data. The first sensor data may be communicated directly from the sensor to the access point, or may be transmitted via a vehicle communication interface (i.e. hardware provided by the vehicle for communication between the vehicle and the network).

The subject vehicle 2 is a first sensing object, and may be a member of a network that also includes the computing apparatus 10. The subject vehicle 2 is exemplary of a Smart Connected Thing (SCoT), or smart object, in the network. The second sensing object or objects may also be exemplary of Smart Connecting Things (SCoTs), or smart objects, in the network.

The subject vehicle 2 may be a motor vehicle. The subject vehicle 2 may be a car, or van. The subject vehicle 2 may be a boat. The subject vehicle 2 may be an airborne vehicle such as a drone or a miniaturised drone. The subject vehicle 2 is operable in an autonomous or partially-autonomous mode by a vehicle control device 20. Operable in this context is taken to mean motion-controllable (or drivable), so that in an autonomous mode the vehicle control device 20 is responsible for controlling speed and direction of motion of the subject vehicle 2 (noting that manual override may be permissible), and in a partially-autonomous mode the vehicle control device 20 may control speed and direction of motion of the vehicle 2 in particular circumstances, such as when an instruction is received (from an authorised entity).Step S102 may comprise receiving second sensor data from one or more sensors provided by a second sensing object, the second sensing object being distinct from the first sensing object, the second sensor data representing the state of the entity in the physical domain.

In the particular example relating to controlling an autonomous vehicle, at step S102 second sensor data also representing location information of objects in the physical domain 200 is received by the computing apparatus 10. A second sensing object is any object in the network provided with sensors that generate location information about objects in the physical domain 200 of the first sensing object. Specifically, the second sensor data represents location information of a second set of one or more objects. The first sensor data represents location information of a first set of one or more objects external to the vehicle 2 in the physical domain 200. The second sensor data represents location information of a second set of one or more objects external to the vehicle 2 in the physical domain 200. The first sensor data and the second sensor data is realtime sensor data. For example, the first sensor data and the second sensor data is data representing a current state of the physical domain 200, wherein current is current allowing for latency in the system. The first set of one or more objects and the second set of one or more objects both represent location information of objects in the physical domain 200.

The physical domain 200 is occupied by objects, both static and dynamic. Static objects 40 are those objects occupying the physical domain and whose location does not changed. Dynamic objects 50 are physical objects whose location changes over time. Both the first set of objects and the second set of objects may include either or both static 40 and dynamic objects 50. The first set of objects and the second set of objects may have overlapping membership. The second set of objects may be a subset of the first set of objects: in this case, the second sensor data may augment the first sensor data by providing more or better location information about an object of which the vehicle 2 is already aware by virtue of the first sensor data. The second set of objects may be partially overlapped by the first set of objects (in terms of membership), and partially exclusive thereof: in this case, the second sensor data may augment the first sensor data by providing location information about an object about which the vehicle is not already aware. The merging S103 and transmitting S104 steps serve to augment the first sensor data with the second sensor data to provide the vehicle 2 with location information about objects in the physical domain that is more accurate (i.e. smaller uncertainty), or more comprehensive (i.e. representing more objects), than the location information that would be available to the vehicle 2 from data generated by its own sensors 28 only (i.e. the first sensor data).

The location information that is represented in the first and second sensor data may be one or more from among: object location; object speed; object velocity; object direction; object acceleration. Each represented property may be accompanied by an indication of confidence or accuracy. The first sensor data and the second sensor data may be formatted in a common data format (wherein common is taken to mean common all sensor data).

Step S103 may comprise merging the first sensor data and the second sensor data to generate an augmented dataset representing the state of the entity. In the particular example relating to controlling an autonomous vehicle, at step S103 the first sensor data is merged with the second sensor data. For example, S103 may comprise merging the first sensor data and the second sensor data to generate a augmented dataset representing location information of a union of the first set of objects and the second set of objects. The merging S103 may include formatting the first sensor data and the second sensor data into a common format. The merging S103 may include reconciling the first set of objects and the second set of objects so that representations of location information of the same object in both of the datasets can be identified and, for example, associated with one another for further processing (i.e. comparison, duplicate removal). The merging S103 may include redundancy removal. The result of the merging S103 is a augmented dataset comprising the first sensor data merged with the second sensor data.

Merging S103 the first sensor data and the second sensor data may comprise comparing the representation of each member of the first set of objects in the first sensor data with the representations of each member of the second set of objects in the second sensor data, to identify members of the first set of objects that also belong to the second set of objects; and for each object belonging to both the first set of objects and the second set of objects, generating a representation of the location information of the object in the augmented dataset by combining the representation of the location information of the object in the first sensor data with the representation of the location information of the object in the second sensor data. For example, the location information may include a distribution over location of probability of the object being at the location. In such cases, the combining may include combining the representation of the location information of the object in the first sensor data with the representation of the location information of the object in the second sensor data by superimposing the distributions of probability over object location for the said object from the first sensor data and second sensor data. Merging S103 the first sensor data and the second sensor data may include aggregating the representations of location information of the first set of objects and the representations of location information of the second set of objects in scenarios to provide an augmented dataset representing location information of objects that are not members of the first set of objects. In other words, the union of the first set of objects and the second set of objects includes one or more objects that are not members of the first set of objects.

The merging S103 may also include aggregating location properties, for example, the first sensor data may represent object location, and the second sensor data may represent object velocity, so that the merging S103 includes augmenting the location information property or properties of an object represented in the first sensor data with a location information property or properties of the same object represented in the second sensor data.

The augmented dataset represents location information of a union of the first set of objects and the second set of objects. The augmented dataset augments the information from the first sensor data with information from the second sensor data. The first sensor data is data from the sensors provided by the subject vehicle, and the second sensor data is data from sensors provided by objects other than the subject vehicle (e.g. other vehicles, or stationary sensors). Therefore, the augmented dataset augments information that would have been available to the vehicle from its own sensors, with information from other sensors. At S104, an excerpt of the augmented dataset is transmitted to the vehicle 2. The augmented dataset is filtered or triaged to select an excerpt that is relevant to the subject vehicle, and that excerpt is transmitted via the above-described data communication link between the vehicle 2 and the computing apparatus 10 executing the method. Transmitting an excerpt prevents transmission bandwidth being wasted with irrelevant data.

The merging step S103 may be performed by a software program or module running on a computing apparatus 10. The software module responsible for the merging step S103 may be referred to as a collective knowledge optimiser, and may contain one or more sub-modules for specific functions, for example:

• Accuracy improvement;

- Confidence improvement;
- Credibility improvement;
- Redundancy elimination;
- Blind spot completion.

It is noted that where reference is made to functions being performed by the vehicle 2, it is implicit that the function may be performed by a particular hardware element or elements of the vehicle 2, such as the vehicle control device 20.

Step S104 may comprise transmitting an excerpt of the augmented dataset to the mobile object, the excerpt being a selected subset of the augmented dataset, the selected subset being selected by the computing apparatus in dependence upon the identity or location of the mobile object. In the particular example relating to controlling an autonomous vehicle, the transmitting step S104 may include transmitting an excerpt of the augmented dataset to the vehicle 2, the excerpt being the representation of location information from the augmented dataset of a selected subset of the union of the first set of objects and the second set of objects, the selected subset being objects for which the represented location is within a first spatial region defined relative to a location of the vehicle 2. The location of the vehicle 2 may be represented by the first sensor data, the second sensor data, or a combination of both. The location of the vehicle 2 may be metadata attached to the first sensor data. The first spatial region may be, for example, a defined radius around the vehicle 2 in the horizontal plane, and extending vertically by a predetermined distance. The defined radius may be predefined or may be adaptive to vehicle velocity.

In an exemplary embodiment, the mobile object is a drone or miniaturised drone operating as one of a fleet of drones or miniaturised drones in the same network, each providing sensor data to the computing apparatus (i.e. the first sensor data and the second sensor data). The representation of a state of the entity may be, for example, a reading of atmospheric temperature, a reading of the chemical composition of a medium in which the drone is operating or from which the drone is otherwise configured to take readings, or, for example, an image of an environmental phenomenon. The computing apparatus triangulates the readings from at least two of the drones or miniature drones in order to determine the state of the entity to a degree of accuracy or confidence. For example, said degree of accuracy or confidence is better than the degree of accuracy or confidence of the reading from any individual drone or miniature drone. The excerpt transmitted to the first sensing object is an augmented version of the reading it sent to the computing apparatus, augmented by the other readings of the same entity state to improve its accuracy. The first sensing object is operable to control an actuator to initiate a functional change in the first sensing object, such as a change in direction or other such change in motion path, or a change in an output signal which may initiate the switching on or off of a device. For example, in the example of environmental phenomena, the first sensing object may be a drone which returns to base in the event of temperature dropping above or below a safe operating temperature.

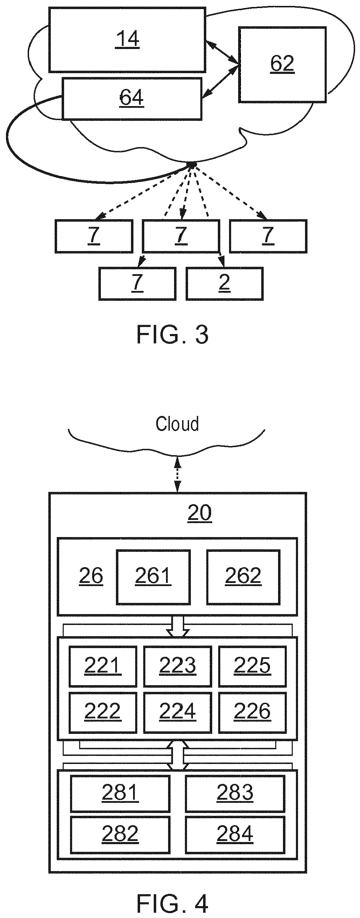

Figure 3 illustrates a network of connected objects according to an embodiment. Smart objects 7 including the subject vehicle 2 are wirelessly connected to a computing apparatus, which may be one or more interconnected servers, running software modules including a data triage 64 and a collective knowledge optimizer 62. The collective knowledge optimizer 62 is a software module running on computing hardware and configured to perform the merging S103 of the first sensor data and second sensor data. The augmented dataset is stored on a memory 14. The augmented dataset may be in the form of, for example, a dynamic map. The data triage 64 is configured to perform the composition and transmission of the excerpt of augmented data in S104.

The collective knowledge optimizer 62 may be operable to determine missing or ambiguous information of the subject vehicle 2 and to identify alternative sources of information from among the network of smart objects 7, and to merge the sensor data from the subject vehicle 2 with the sensor data from the identified alternative sources of information. The augmented data may merge data from multiple sources relating to the same object in order to create more reliable information in terms of accuracy and confidence of position, trajectory, and/or classification.

Figure 4 illustrates an example of a vehicle control device 20 which may be included as part of an embodiment, or be in communication with an embodiment. The sensors 281 to 284 are exemplary of the vehicle-mounted sensors described elsewhere in this document, and provide the first sensor data. The sensors 28 may include one or more from among: a LIDAR 281, a RADAR 282, camera 283, and any other sensor providing information indicating the location and/or position and/or velocity and/or acceleration of the vehicle 2 or any other object within the physical domain 200.

The vehicle computing device memory 24 stores instructions which, when processed by the vehicle computing device processor 22, causes the vehicle computing device processor 22 to implement one or more from among the following exemplary artificial intelligence functions: an object contact predictor 221, a location identifier 222, an object recognition function 223, a swarm intelligence function 224, a motion path identifier 225, and a controller 226. The vehicle computing device communication interface 26 may be configured to operate as two functional modules, a knowledge augmenter 261, and a knowledge exchanger 262.

The sensors 281 to 284, and the associated processing functions 221 to 226, analyse the measured sensor data to infer motion of dynamic physical objects (via the motion path identifier 225), location of physical objects (via the location identifier), and classification of objects (via the object recognition function 225), and to use the inferred information in the controller 226.

The object contact predictor 221 models and predicts the co-existence of multiple objects at the same geo-location (spatial coordinates) at a point using the received excerpt of augmented data. The time and location at which the vehicle 2 will be, and thus at which co-existence of multiple objects is to be predicted, may be computed by the vehicle computing device 20 itself or in collaboration with the computing apparatus 10. Predicted co-existence is exemplary of a spatial interaction, which triggers an instruction to the controller 226 to assume a motion path that will avoid the spatial interaction.

The vehicle control device 20 is a component of the subject vehicle 2. Such a vehicle control device 20 may be configured to periodically query the computing apparatus; and in response to the query to receive the excerpt of augmented data transmitted at S104. The vehicle control device 20, for example, at the object contact predictor 221, is configured to use the excerpt of augmented data to identify any object having a location or predicted path contemporaneously within a defined contact threshold distance of the predicted path of the vehicle 2. For example, the excerpt of augmented data is generated on behalf of the vehicle by the data triage 64 and/or the collective knowledge optimizer 62.

In other words, the object contact predictor 221 takes customised information from the fog or cloud (i.e. the query response) and uses it to compute a risk of co-existing with other objects in the future, based on the location information represented in the received excerpt of augmented data (the query response). This information is conveyed to the controller as an instruction to avoid such co-existence, and hence optimises the manoeuvring of the vehicle 2 in such a way that collision is avoided, and furthermore may also avoid abrupt acceleration, deceleration, or steering.

The knowledge augmenter 261 may be a software function, or layer, such as an API or API-like layer that receives the excerpt of augmented data from the computing apparatus 10 transmitted at S104 and distributes the received data within the vehicle control device 20, for example, to the object contact predictor 221.

The knowledge exchanger 262 may be a software function, or layer, such as an API or an API-like layer that converts data collected by the sensor 281-284 into a format standardised across the network for merging by the computing apparatus 10 at S103. For example, the standardised format may reduce the amount of data to only information relevant to the location information of represented objects, thereby reducing superfluous bandwidth usage.

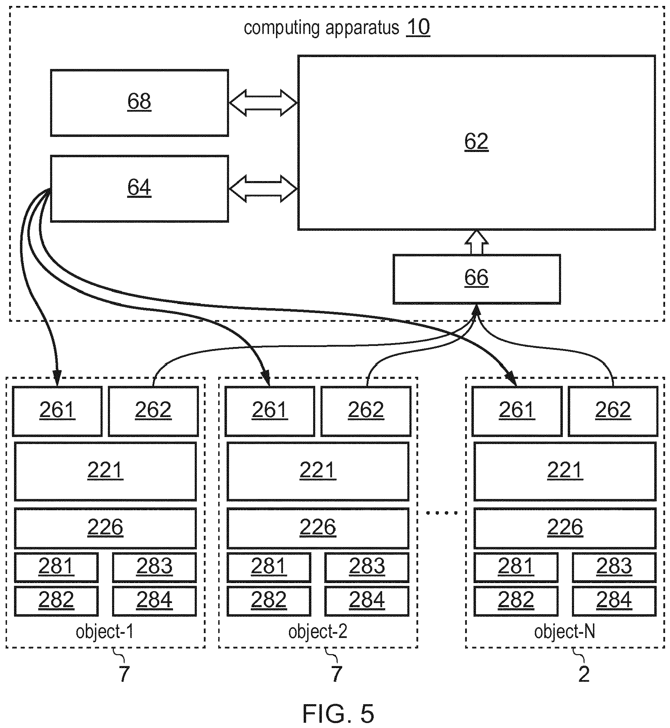

Figure 5 illustrates an embodiment. In the example of Figure 5, a plurality of sensing objects, which may be Smart Connected Things (SCoT) 7 and one of which is the subject vehicle 2, are in data communication with the computing apparatus 10, which is one or more servers in the cloud or fog. A sensing object is an object with connectivity allowing data to be exchanged with computing apparatus, for example, the computing apparatus 10, as part of a computing network. The sensing objects are embedded with knowledge augmenter software 261 and knowledge exchange software 262, as discussed above, which leverage a data communication with the computing apparatus 10. The sensing objects are autonomous or semi-autonomous vehicles, and include an object contact predictor 221, which uses the excerpt of augmented data received from the computing apparatus 10 to predict collisions and to instruct the motion controller 226 to assume a path which will avoid collision. The sensing objects may be referred to as SCoTs, examples of SCoTs include the vehicle 2 (either as a collective set of components, or individual components thereof such as the vehicle-mounted sensor 28 or the vehicle control device 20), the static sensor 30. Each sensing object has one or more sensors from among the four types of sensor 281-284. The computing network includes the computing apparatus 10, which is illustrated with four functional modules: the triangulator 66, the collective knowledge optimizer 62, the data triage 64, and the dynamic map 68. It is noted that the division into functional modules provides an example of how functions may be divided between plural computing devices, processors, or threads. However, the computing apparatus is a computing device or network of computing devices executing software to implement the four functions illustrated, and it may be that said functionality is provided by a single computing program, or by plural computing programs.

The data triage 64 may filter the realtime sensor data before it reaches the first computing apparatus 10 for merging, for example, by removing duplicate data entries. Alternatively, duplicate data entries may be removed by the collective knowledge optimizer 62.

The triangulator 66 operates in collaboration with the collective knowledge optimizer 62 to identify gaps, for example, blind spots, in realtime sensor data from a vehicle 2, and to fill those gaps with data from sensors such as stationary sensors or sensors from other vehicles, the data filling the gap may be communicated to the vehicle 2 (or its vehicle computing device 20). The collective knowledge optimizer merges the sensor data as discussed above in relation to step S103. The augmented data is stored, for example, in the form of a dynamic map 68. The dynamic map 68 may use the location information of sensed objects, along with predicted paths for those objects, to maintain a dynamic 4-dimensional map which projects motion of objects into the future based on their sensed locations and predicted motion paths. The data triage 64 extracts an object-centric excerpt for each autonomous vehicle in the network, and transmits the excerpt to the respective vehicle for use in decision making, such as autonomous driving.

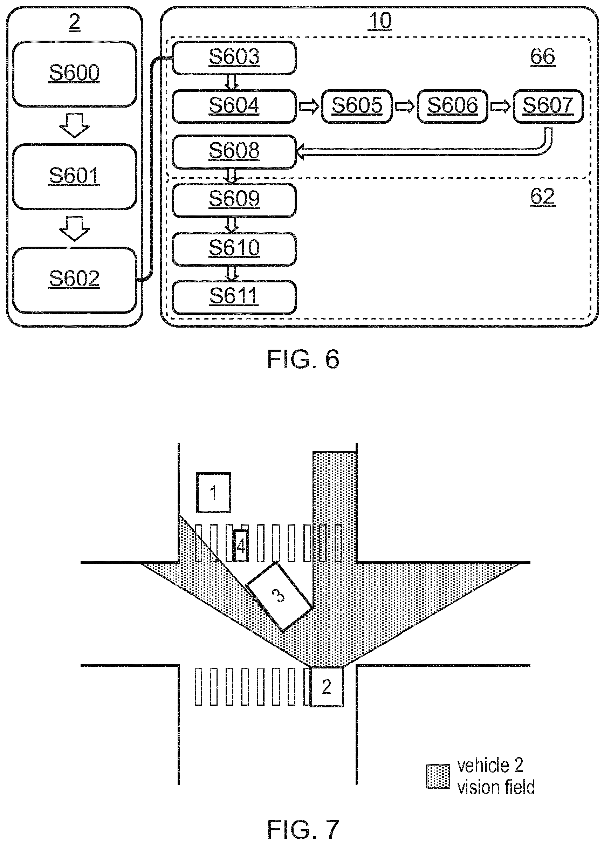

Figure 6 illustrates an exemplary process that may be performed by the subject vehicle 2 and the computing apparatus 10. For illustrative purposes, the data processing functions of the computing apparatus 10 are divided into two functional modules, the triangulator 66 and the collective knowledge optimiser 62. It is noted that the division is for explanatory purposes, and that embodiments may utilise the same computing hardware for both functions.

Steps S600 to S602 are performed at the subject vehicle 2 (i.e. the autonomous vehicle whose sensor data is augmented). At S600, sensor data is acquired from the surrounding environment by vehicle-mounted sensors as first sensor data. S601 is an optional object recognition step, in which an artificial intelligence object recognition procedure is performed on the acquired sensor data. At S602 the sensor data is formatted into the standardised KT-format utilised by the computing apparatus 10 for triangulating the data.

Steps S603 to S611 are performed at the computing apparatus 10. At step S603 sensor data is received from the subject vehicle 2 and from other sensing objects acquiring sensor data by making readings of the physical domain as second sensor data. All received sensor data is formatted according to a standardised format in the network. At step S604, the sensor data from the different sources (i.e. the first and second sensor data) is combined, including location information and optionally also metadata such as object recognition information, for example in a data graph. The derivation of information by merging sensor data from multiple sources may be referred to as collective intelligence. At S605 the data graph is used to create hypothesis regarding which records from the first sensor data and second sensor data relate to the same physical domain objects. At S606 the created hypothesis are verified by analysing the data, and at S607 any records determined to relate to the same object are aggregated (aggregating records for valid hypothesis Eobj and Pobj), and at S608 merged, for example by superimposing probability distributions of locations of the same object from multiple sources onto one another. The merging at S608 may be described as triangulation over the aggregated records (Tobj).

At S609, records relating to the sensed objects, including the merged records, are stored, for example, as a data graph. The data graph may indicate distances between objects, including the subject vehicle 2. Thereby, at S610, an object-centric search is performed for the subject vehicle 2 to extract all records relating to objects within a predefined spatial region relative to the subject vehicle 2. At S611 the extracted data, i.e. the excerpt of the augmented data, is transmitted back to the subject vehicle 2 for use in decision making such as motion path determination. The excerpt may be in the same data format that is used for the first and second sensor data.

Let N be a network of n distinct sensing objects 2, 7. Each sensing object contains sensors 28 and may also include a processor, enabling it to be a decision maker. Sensing objects 30 may be included in the network which gather sensor data but do not exercise decision making. Let S(I, n) be the I sensor out of NI, and KI(n) be the sensor data output of the n sensing objects. Let Dn be the set of surroundings objects detected by sensing objects n.

Embodiments merge processed data coming from environmental and vehicle sensors from the KI(n) of the sensing objects. Each connected sensing object provides, (potentially in real time), accurate information about its current status and a complete list of its surrounding detected objects with their estimated location (GPS or angle/distance), estimated relative speed and acceleration along with confidence and/or accuracy levels. In addition, it may provide other metadata such as classification of detected objects (e.g., vehicle, person, street furniture, etc.), their size (3D), description (e.g., truck, car, motorbike, child, senior citizen, traffic light, road sign, etc.), detailed content (model of car, school child, baby stroller, speed limit road sign, etc.).

The aggregated distribution of estimated position $E_{obj}$ and the aggregated vectorial distribution of trajectory prediction $P_{obj}$ (associated with their respective confidence level) of the surroundings elements, each sensing object should be capable to generate and communicate the information generated by its own sensed data KI. The higher level triangulation $T_{obj}$ can then be computed based on the equations shown below:

$$KI_{obj_n} = KI\_Unit_n(\{S(I, n) \text{ for i in } [0, NI]\})$$

$$KI_{obj_n} = [\{Eobj(e)_{n|KT-format}, Pobj(e)_{n|KT-format}\} \text{ for e in Dn}]$$

$$Eobj(e) = Estimation\_module(\{Eobj(e)_n | KI_{obj_n}, e \text{ in Dn}\} \text{ for all SCoT})$$

$$Pobj(e) = Prediction\_module(\{Pobj(e)_n | KI_{obj_n}, e \text{ in Dn}\} \text{ for all SCoT})$$

$$Tobj(e) = Tringulation\_module(\{Eobj(e), Pobj(e)\})$$

$$Tobj(e) = (\{Eobj\_augmented(e), Pobj\_augmented(e)\})$$

A demonstrative example is disclosed below and in association with Figures 7 to 10.

In the situation shown in Figure 7, a pedestrian 4 is crossing the street despite a red pedestrian light at the zebra crossing. Object 3 is a car moving in front of the vision field of sensing object 2 (a vehicle in data communication with the computing apparatus 10 as subject vehicle). Vehicle 1 is a sensing object in data communication with the computing apparatus 10. It is assumed that the pedestrian does not have a data connection to the computing apparatus 10, i.e. that the pedestrian is not in possession of a smart object 7 forming part of the network. It is assumed that cars 1 and 2 both sensing objects connected to the computing apparatus 10 as part of the network, for example, they are smart objects or connected SCoTs. Hence, either vehicle may receive object-centric augmented knowledge from the computing apparatus 10 as a subject vehicle.

Vehicles 1 and 2 are connected to the computing apparatus 10 via a wireless data communication. Vehicle 1 will share its knowledge of the existence of objects 3 & 4 (including one or more from among classification, position, trajectory, etc.) while vehicle 2 shares its knowledge of object 3 only, because object 4 is in a blind spot from the perspective of vehicle 2. The computing apparatus 10 is able to aggregate and triangulate this knowledge to form a full knowledge of the situation. This augmented knowledge is analysed by the computing apparatus 10 (for example, by the collective knowledge optimiser 62) to identify the blind spot in the vehicle 2 vision field caused by object 3, and will dispatch the relevant excerpt of augmented data to vehicle 2 immediately, hence avoiding a collision with the pedestrian.

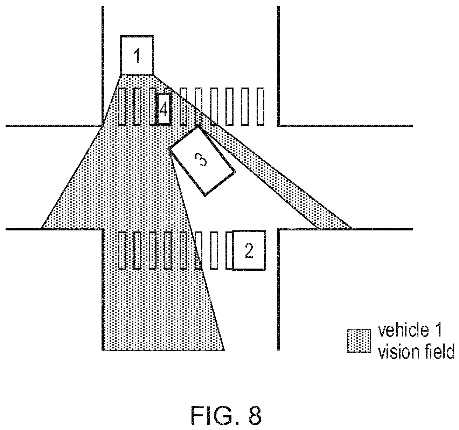

Figure 8 illustrates the vision field of vehicle 1, noting that object 4 is visible to vehicle 1.

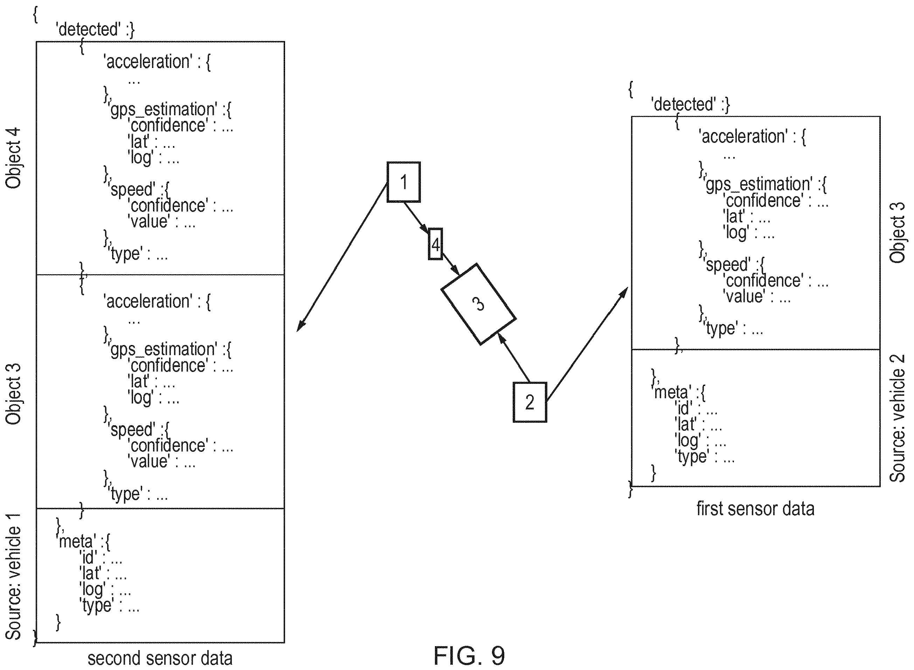

Figure 9 illustrates the sensor data generated by vehicle 2 for sending to the computing apparatus 10 as first sensor data (that is, sensor data from the subject vehicle), and the sensor data generated by vehicle 1 for sending to the computing apparatus as second sensor data (that is, sensor data from another sensing object that may be used to augment the first sensor data).

As illustrated in Figure 9, a standardised data format may be used by all smart objects in the network, which facilitates knowledge sharing. Since the field of vision of the vehicle 1 sensors includes the object 4, vehicle 1 is able to synthesise descriptive information representing location information and optionally also other information about object 4, such as one or more from among position, classification of object type, speed, acceleration, confidence level of measurements, among others. The sensor data from vehicles 1 and 2 will be shared at the computing apparatus 10.

Defining N_in, the set of smart objects connected to the computing apparatus 10, and N_out, the set of objects that are not connected. The computing apparatus 10 may create a bidirectional graph of N_in smart objects and unilateral from N_in smart objects to N_out objects based on detection knowledge provided by each N_in smart objects. The triangulation technique will be triggered if plural N_in smart objects are detecting the same object, the triangulation being the merging of sensor data about the same object from multiple sensing objects to improve the information about said same object. Finally, a first spatial region for each smart object is defined, wherein an excerpt of the augmented data is extracted by selecting augmented data relating to objects determined to be within the first spatial region for the pertinent subject vehicle. The first spatial region may be, for example, a particular radius in the plane of the ground. It may be that vertical location can be ignored for the purposes of excerpt extraction, or, the first spatial region may have a defined height.

The sensor data illustrated in Figure 9 is transmitted to the computing apparatus 10 and processed thereby (for example, steps S103 and S104). For example, the computing apparatus 10 may perform one or more processes from among: filtering (identifying possible records from different sources relating to the same object by comparing records from local sources); hypothesis generation (which of those possibilities may be records about the same physical domain objects?); hypothesis verification (perform analysis to check hypotheses and aggregate records if positive); triangulation (a specific mechanism of merging or triangulating multiple records about the same object).

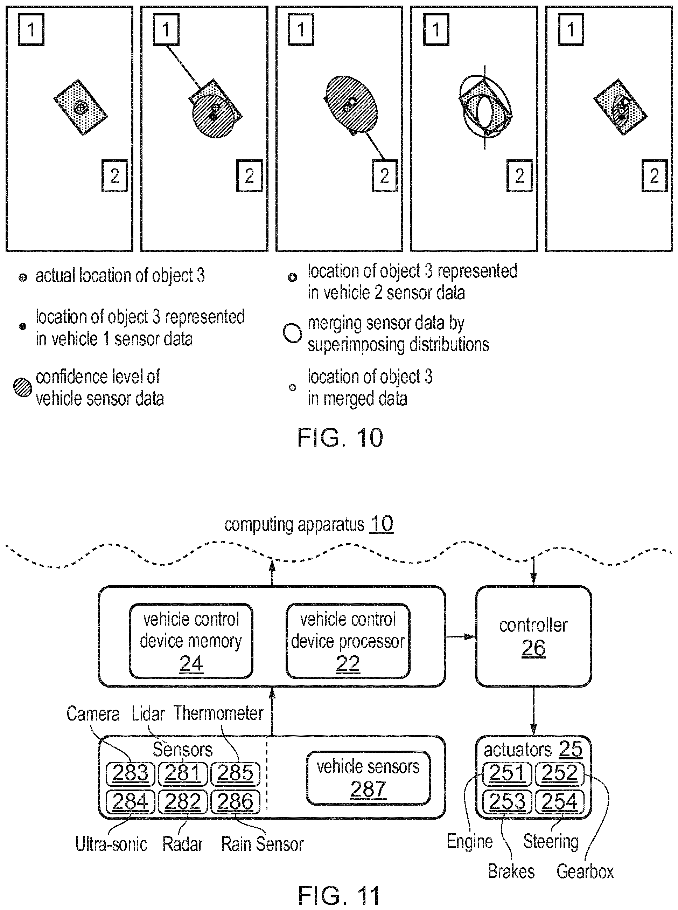

Referring to the situation in Figure 6, an example of how plural records relating to the same object may be merged with one another is illustrated in Figure 10. Each sensing object reports its knowledge of the location of object 3 in a format comprising estimated position and confidence level (e.g., Gaussian distribution around the mean). The estimated position and confidence level may be represented as a distribution of probability of the object being found at a location. The reported estimated position from either individual sensing object is likely to differ from the actual value as shown in Figure 10. Moreover, the confidence perceived by each sensing object is not necessarily the same. The computing apparatus 10 merges both distributions by superimposition to find the overlapping zone, and as such, and provides a revised representation of location as the centre of the overlapping zone. Such merging may be conducted on reported location information including e.g., speed, direction, size, etc., and the outcome of this merging is the augmented dataset relating to object 3.

The augmented dataset includes the new representation of object 3 obtained by merging the two records from the first and second sensor data. The augmented dataset also includes the representation of object 4 from the second dataset (from the sensor data of vehicle 1). For example, the collective knowledge optimiser 62 may identify that both vehicles 1 and 2 will benefit from the improved location information relating to object 3. The collective knowledge optimiser 62 stores the augmented dataset, and via the data triage 64, an excerpt is selected for transmitting to the subject vehicle 2, based on the first spatial region. The excerpt is transmitted to the subject vehicle 2, and utilised in decision making, for example, in selecting a motion path for the vehicle.

As illustrated in Figure 11, sensors including, for example, a LIDAR 281, a RADAR 282, a camera 283, and an ultrasonic sensor 284 take readings from the physical domain. Examples of other sensors taking readings from the physical domain include a thermometer 285 and a rain sensor 286. Other sensor data may be provided by vehicle sensors 287, which may include one or more from among an odometer, an acceleration sensor, a gyroscope, and a filling level sensor. The data from sensors 281 to 287 is accessible by the vehicle computing device 20 for processing, and for transmitting to the computing apparatus 10.

The vehicle computing device 20 processes the data received from the sensors, some of which processed data is utilised by the vehicle 2 itself, and some is transmitted to the computing apparatus 10. Processing functions which may be performed at the vehicle include lane tracking, object tracking, data filtering, motion estimation, grid extraction or modelling, and traffic sign and traffic light detection. Some processed data, including those representing location information of physical objects, is passed to higher level modules on the computing apparatus 10. The vehicle 2 may utilise some of the data for quasi-autonomous world modelling.

Utilising the excerpt of augmented data received from the computing apparatus 10 (represented by the incoming downward arrow), the controller 26 calculates a trajectory (or motion path) for the subject vehicle 2, and instructs the actuators 25, including one or more from among engine 251, gearbox 252, brakes 253, and steering 254, to implement the calculated motion path. Vehicle stabilisation may also be performed by the controller 26, for example, based on input data from one or more vehicle sensors 287. It is noted that communication with the computing apparatus 10 or other higher level modules may be via a communication interface such as HMI or V2X.

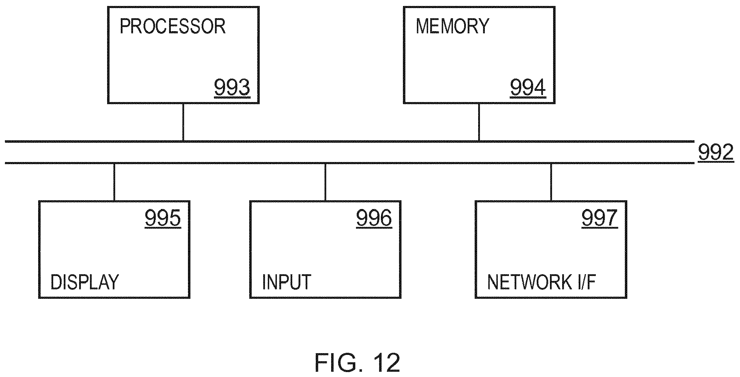

FIGURE 12 is a block diagram of a computing apparatus 10, such as a server, which embodies the present invention, and which may be used to implement a method of an embodiment of receiving, merging, and transmitting sensor data. The computing apparatus comprises a processor 993, and memory, 994. The computing apparatus also includes a network interface 997 for communication with other computing apparatus, for example with vehicle control devices 20 of embodiments. The computing apparatus 10 may be a computing device of the form shown in Figure 12. The vehicle control device 20 may be a computing device of the form shown in Figure 12. Any other computing apparatus of an embodiment may be a computing device of the form shown in Figure 12. The computing apparatus 10 of an embodiment may be a plurality of interconnected computing apparatuses such as those illustrated in Figure 12.

For example, an embodiment may be composed of a network of such computing apparatus. Optionally, the computing apparatus also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing apparatus 10 and execute processing operations, for example executing code stored in the memory to implement the various different functions of methods of instructing a motion path of a vehicle, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The data triage 64 of, for example, Figures 3, and 5, may be a processor 993 (or plurality thereof) executing processing instructions (a program) stored on a memory 994 and exchanging data via a network I/F 997. In particular, the processor 993 executes processing instructions to receive, via the network I/F, augmented data, and to extract an excerpt for each subject vehicle. Furthermore, the processor 993 may execute processing instructions to transmit, via the network I/F 997, a augmented data excerpt to the vehicle control device 20 for object contact prediction.

The triangulation function 66, as shown, for example, in Figures 5, may be a processor 993 (or plurality thereof) executing processing instructions (a program) stored on a memory 994 and exchanging data via a network I/F 997. In particular, the processor 993 executes processing instructions to receive, via the network I/F, realtime sensor data from sensors taking readings from the physical domain 200, both from the first sensing object and the second sensing object, and optionally also to merge the received data. Furthermore, the processor 993 may execute processing instructions to transmit, via the network I/F 997, the augmented data, or an excerpt thereof, to the vehicle control device 20 via the data triage 64, for object contact prediction by the object contact predictor 221.

Although the example is presented with respect to there being two sensing objects and hence two source data sets (first sensor data and second sensor data), embodiments are not limited to there being two only, and there may be more than two. In fact, it can be appreciated that advantages are enhanced by the addition of sensor data from more than two, for example, three, four, five, ten, or one hundred sensing objects.

The object contact predictor 221, as shown, for example, in Figures 4 and 5, may be a processor 993 (or plurality thereof) executing processing instructions (a program) stored on a memory 994 and exchanging data via a network I/F 997. In particular, the processor 993 executes processing instructions to receive, via the network I/F, an excerpt of the augmented dataset. Furthermore, the processor 993 may execute processing instructions to instruct the vehicle control mechanism to adopt a motion path avoiding predicted spatial interactions (i.e. contact) with other objects.

Methods embodying the present invention may be carried out on a computing device such as that illustrated in Figure 12. Such a computing device need not have every component illustrated in Figure 12, and may be composed of a subset of those components. A method embodying the present invention may be carried out by a single computing device in communication with one or more data storage servers via a network. The computing device 12 may be a data storage itself merging the received sensor data and transmitting an excerpt of the augmented data to a subject vehicle.

A method embodying the present invention may be carried out by a plurality of computing devices operating in cooperation with one another. One or more of the plurality of computing devices may be a data storage server storing at least a portion of the augmented dataset.

## Claims

1. A method comprising, at a computing apparatus:

   receiving first sensor data from one or more sensors provided by a first sensing object, the first sensing object being an autonomous or partially autonomous mobile object, the mobile object having wireless connectivity, the first sensor data representing a state of an entity in the physical domain;
   receiving second sensor data from one or more sensors provided by a second sensing object, the second sensing object being distinct from the first sensing object, the second sensor data representing the state of the entity in the physical domain;
   merging the first sensor data and the second sensor data to generate an augmented dataset representing the state of the entity;
   transmitting an excerpt of the augmented dataset to the mobile object, the excerpt being a selected subset of the augmented dataset, the selected subset being selected by the computing apparatus in dependence upon the identity or location of the mobile object.

2. A method according to claim 1, wherein
   the entity state is location information of one or more objects in the physical domain, the first sensor data representing location information of a first set of one or more objects in the physical domain, and the second sensor data representing location information of a second set of one or more objects in the physical domain;
   the mobile object is an autonomous object or a semi-autonomous mobile object operating in autonomous mode;
   the augmented dataset represents location information of a union of the first set of objects and the second set of objects;
   the selected subset is data representing objects for which the represented location is within a first spatial region defined relative to a location of the mobile object.

3. The method according to claim 2, wherein
   the selected subset comprises an object that is a member of the second set of objects and is not a member of the first set of objects.

4. The method according to claim 2 or 3, wherein
the excerpt of the augmented dataset includes a representation of an object that is a member of both the first set of objects and the second set of objects, the representation in the augmented dataset including location information from the representation of the object in the first sensor data augmented with location information from the representation of the object in the second sensor data.

5. The method according to any of claims 2 to 4, wherein
merging the first sensor data and the second sensor data comprises comparing the representation of each member of the first set of objects in the first sensor data with the representations of each member of the second set of objects in the second sensor data, to identify members of the first set of objects that also belong to the second set of objects; and
for each object belonging to both the first set of objects and the second set of objects, generating a representation of the location information of the object in the augmented dataset by combining the representation of the location information of the object in the first sensor data with the representation of the location information of the object in the second sensor data.

6. The method according to claim 5, wherein
the representation of location information of objects in the first sensor data includes an indication of the accuracy of the representation of the location information;
the representation of location information of objects in the second sensor data includes an indication of the accuracy of the representation of the location information;
the representation of location information of objects in the augmented dataset includes an indication of the accuracy of the representation of the location information;
the representation of location information in the augmented dataset of the or each object belonging to both the first set of objects and the second set of objects generated by combining the representation of the location information of the object in the first sensor data with the representation of the location information of the object in the second sensor data, is of a higher accuracy than the accuracy of the representation of the location information of the said object in the first sensor data and the second sensor data.

7. The method according to claim 6, wherein
the indication of the accuracy of the representation of the location information of each object in the first sensor data includes a distribution of probability over object location;
the indication of the accuracy of the representation of the location information of each object in the second sensor data includes a distribution of probability over object location;
and, the combining the representation of the location information of the object in the first sensor data with the representation of the location information of the object in the second sensor data includes superimposing the distributions of probability over object location for the said object from the first sensor data and second sensor data.

8. The method according to any of the preceding claims, wherein
the state of the entity or the representation of the location information of each object in the first sensor data, second sensor data, and augmented dataset, includes a representation of object location, and/or a representation of object velocity, and/or a representation of object acceleration.

9. The method according to any of the preceding claims, further comprising
at the mobile object, receiving and using the excerpt of the augmented dataset to control an actuator initiating a functional change in the mobile object.

10. A computing apparatus comprising processor hardware, memory hardware, and a data communication interface, and configured to perform a method comprising:

receiving first sensor data from one or more sensors provided by a first sensing object, the first sensing object being an autonomous or partially autonomous mobile object, the mobile object having wireless connectivity, the first sensor data representing a state of an entity in the physical domain;
receiving second sensor data from one or more sensors provided by a second sensing object, the second sensing object being distinct from the first sensing object, the second sensor data representing the state of the entity in the physical domain;
merging the first sensor data and the second sensor data to generate an augmented dataset representing the state of the entity;

transmitting an excerpt of the augmented dataset to the mobile object, the excerpt being a selected subset of the augmented dataset, the selected subset being selected by the computing apparatus in dependence upon the identity or location of the mobile object.

11. A system comprising:

a computing apparatus according to claim 10; and
the first sensing object.

12. The system according to claim 11, further comprising:
the second sensing object.

13. The system according to claim 11 or 12, further comprising:
at the first sensing object, receiving and using the excerpt of the augmented dataset to instruct a motion path for the mobile object.

14. A computer program comprising processing instructions which, when executed by a computing apparatus having processor hardware and memory hardware, cause the computing apparatus to perform a method according to any of claims 1 to 9.

15. A method comprising, at a computing apparatus:

receiving first sensor data from one or more sensors provided by a first sensing object, the first sensing object being an autonomous or partially autonomous mobile object, the first sensor data representing location information of a first set of one or more objects external to the mobile object in the physical domain;
receiving second sensor data from one or sensors provided by a second sensing object, the second sensing object being distinct from the first sensing object, the sensor data representing location information of a second set of one or more objects in the physical domain;
merging the first sensor data and the second sensor data to generate an augmented dataset representing location information of a union of the first set of objects and the second set of objects;
transmitting an excerpt of the augmented dataset to the mobile object, the excerpt being the representation of location information from the augmented dataset of a selected subset of the union of the first set of objects and the second set of objects, the selected subset being objects for which the represented location is within a first spatial region defined relative to a location of the mobile object.

**Amended claims in accordance with Rule 137(2) EPC.**

1. A method comprising, at a computing apparatus (10):

receiving (S101) first sensor data from one or more sensors provided by a first sensing object (2), the first sensing object being an autonomous or partially autonomous mobile object, the mobile object having wireless connectivity, the first sensor data representing a state of an entity in the physical domain, including a representation of object location of objects in the physical domain;
receiving (S102) second sensor data from one or more sensors provided by a second sensing object (30), the second sensing object being distinct from the first sensing object, the second sensor data representing the state of the entity in the physical domain, including a representation of object location of objects in the physical domain;
merging (S103) the first sensor data and the second sensor data to generate an augmented dataset representing the state of the entity;
transmitting (S104) an excerpt of the augmented dataset to the mobile object, the excerpt being a selected subset of the augmented dataset and including a representation of object location of objects in the physical domain, the selected subset being selected by the computing apparatus in dependence upon the identity or location of the mobile object; **characterised in that**:

the representation of location information of objects in the first sensor data includes an indication of the accuracy of the representation of the location information as a distribution of probability over object location;
the representation of location information of objects in the second sensor data includes an indication of the accuracy of the representation of the location information as a distribution of probability over object location;

the representation of location information of objects in the augmented dataset includes an indication of the accuracy of the representation of the location information;

the representation of location information in the augmented dataset of the or each object belonging to both the first set of objects and the second set of objects is generated by superimposing the distributions of probability over object location for the said object from the first sensor data and second sensor data, and is of a higher accuracy than the accuracy of the representation of the location information of the said object in the first sensor data and the second sensor data.

2. A method according to claim 1, wherein

the entity state is location information of one or more objects in the physical domain, the first sensor data representing location information of a first set of one or more objects in the physical domain, and the second sensor data representing location information of a second set of one or more objects in the physical domain;

the mobile object (2) is an autonomous object or a semi-autonomous mobile object operating in autonomous mode;

the augmented dataset represents location information of a union of the first set of objects and the second set of objects;

the selected subset is data representing objects for which the represented location is within a first spatial region defined relative to a location of the mobile object.

3. The method according to claim 2, wherein

the selected subset comprises an object that is a member of the second set of objects and is not a member of the first set of objects.

4. The method according to claim 2 or 3, wherein

the excerpt of the augmented dataset includes a representation of an object that is a member of both the first set of objects and the second set of objects, the representation in the augmented dataset including location information from the representation of the object in the first sensor data augmented with location information from the representation of the object in the second sensor data.

5. The method according to any of claims 2 to 4, wherein

merging the first sensor data and the second sensor data comprises comparing the representation of each member of the first set of objects in the first sensor data with the representations of each member of the second set of objects in the second sensor data, to identify members of the first set of objects that also belong to the second set of objects; and

for each object belonging to both the first set of objects and the second set of objects, generating a representation of the location information of the object in the augmented dataset by combining the representation of the location information of the object in the first sensor data with the representation of the location information of the object in the second sensor data.

6. The method according to any of the preceding claims, wherein

the state of the entity or the representation of the location information of each object in the first sensor data, second sensor data, and augmented dataset, includes a representation of object velocity, and/or a representation of object acceleration.

7. The method according to any of the preceding claims, further comprising

at the mobile object, receiving and using the excerpt of the augmented dataset to control an actuator initiating a functional change in the mobile object.

8. A computing apparatus (10) comprising processor hardware (12), memory hardware (14), and a data communication interface (16), and configured to perform a method comprising:

receiving first sensor data from one or more sensors provided by a first sensing object (2), the first sensing object being an autonomous or partially autonomous mobile object, the mobile object having wireless connectivity, the first sensor data representing a state of an entity in the physical domain, including a representation of object location of objects in the physical domain;

receiving second sensor data from one or more sensors provided by a second sensing object (30), the second sensing object being distinct from the first sensing object, the second sensor data representing the state of the entity in the physical domain, including a representation of object location of objects in the physical domain;

merging the first sensor data and the second sensor data to generate an augmented dataset representing the state of the entity;
transmitting an excerpt of the augmented dataset to the mobile object (2), the excerpt being a selected subset of the augmented dataset and including a representation of object location of objects in the physical domain, the selected subset being selected by the computing apparatus (10) in dependence upon the identity or location of the mobile object,

**characterised in that**:

the representation of location information of objects in the first sensor data includes an indication of the accuracy of the representation of the location information as a distribution of probability over object location;
the representation of location information of objects in the second sensor data includes an indication of the accuracy of the representation of the location information as a distribution of probability over object location;
the representation of location information of objects in the augmented dataset includes an indication of the accuracy of the representation of the location information;
the representation of location information in the augmented dataset of the or each object belonging to both the first set of objects and the second set of objects is generated by superimposing the distributions of probability over object location for the said object from the first sensor data and second sensor data, and is of a higher accuracy than the accuracy of the representation of the location information of the said object in the first sensor data and the second sensor data.

9. A system comprising:

a computing apparatus (10) according to claim 8; and
the first sensing object (2).

10. The system according to claim 9, further comprising:
the second sensing object (30).

11. The system according to claim 9 or 10, further comprising:
at the first sensing object (2), receiving and using the excerpt of the augmented dataset to instruct a motion path for the mobile object.

12. A computer program comprising processing instructions which, when executed by a computing apparatus (10) having processor hardware (12) and memory hardware (14), cause the computing apparatus (10) to perform a method according to any of claims 1 to 7.

receive first
sensor data
S101

receive second
sensor data
S102

merge
S103

transmit excerpt
S104

FIG. 1

30

40

20

28

22 24 26

2

50

200

10

14

12

16

FIG. 2

FIG. 3

FIG. 4

FIG. 5

FIG. 6

vehicle 2
vision field

FIG. 7

vehicle 1
vision field

FIG. 8

FIG. 9

first sensor data

Source: vehicle 2

Object 3

```
{
  'detected' :{
    'acceleration' : {
      ...
    },
    'gps_estimation' :{
      'confidence' : ...
      'lat' : ...
      'log' : ...
    },
    'speed' :{
      'confidence' : ...
      'value' : ...
    },
    'type' : ...
  }
```

```
  'meta' :{
    'id' : ...
    'lat' : ...
    'log' : ...
    'type' : ...
  }
}
```

second sensor data

Source: vehicle 1

Object 3

Object 4

```
{
  'detected' :{
    'acceleration' : {
      ...
    },
    'gps_estimation' :{
      'confidence' : ...
      'lat' : ...
      'log' : ...
    },
    'speed' :{
      'confidence' : ...
      'value' : ...
    },
    'type' : ...
  }
```

```
    'acceleration' : {
      ...
    },
    'gps_estimation' :{
      'confidence' : ...
      'lat' : ...
      'log' : ...
    },
    'speed' :{
      'confidence' : ...
      'value' : ...
    },
    'type' : ...
```

```
  'meta' :{
    'id' : ...
    'lat' : ...
    'log' : ...
    'type' : ...
  }
}
```

1
4
3
2

⊕ actual location of object 3

• location of object 3 represented in vehicle 1 sensor data

◍ confidence level of vehicle sensor data

○ location of object 3 represented in vehicle 2 sensor data

◯ merging sensor data by superimposing distributions

⊙ location of object 3 in merged data

FIG. 10

FIG. 11

```
┌─────────────────┐          ┌─────────────────┐
│ PROCESSOR       │          │ MEMORY          │
│                 │          │                 │
│            993  │          │            994  │
└────────┬────────┘          └────────┬────────┘
         │                            │
─────────┴────────────────────────────┴───────────────  992
─────────────────────────────────────────────────────
     │                  │                    │
┌────┴───────────┐ ┌────┴───────────┐ ┌──────┴──────────┐
│           995  │ │           996  │ │           997   │
│                │ │                │ │                 │
│ DISPLAY        │ │ INPUT          │ │ NETWORK I/F     │
└────────────────┘ └────────────────┘ └─────────────────┘
```

FIG. 12

Europäisches
Patentamt

European
Patent Office

Office européen
des brevets

# EUROPEAN SEARCH REPORT

Application Number

EP 19 18 3734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/314247 A1 (SUN FEI [US] ET AL) 1 November 2018 (2018-11-01) * paragraphs [0003], [0006], [0009], [0013] - [0018], [0050], [0054], [0066], [0083], [0084] - [0085], [0091] - [0094] * ----- | 1-15 | INV. G08G1/01 G08G1/09 G08G1/16 B60W30/095 G08G1/0967 G05D1/00 |
| X | US 2014/358353 A1 (IBANEZ-GUZMAN JAVIER [FR] ET AL) 4 December 2014 (2014-12-04) * paragraphs [0008], [0015] - [0018], [0021], [0023], [0103] - [0105] * ----- | 1-15 | |
| X | US 2019/147372 A1 (LUO WENJIE [CA] ET AL) 16 May 2019 (2019-05-16) * paragraphs [0023] - [0025], [0041], [0057] - [0059], [0080] - [0082], [0084] - [0087] * ----- | 1-15 | |
| X | US 2018/136000 A1 (RASMUSSON JR ROBERT EARL [US] ET AL) 17 May 2018 (2018-05-17) * paragraphs [0013] - [0017], [0020] - [0029], [0031] - [0032], [0042], [0044], [0051], [0053], [0055] - [0056], [0058] - [0059], [0068] * ----- | 1-15 | TECHNICAL FIELDS SEARCHED (IPC) G08G B60W G05D |

The present search report has been drawn up for all claims

| Place of search | Date of completion of the search | Examiner |
|---|---|---|
| The Hague | 9 January 2020 | Thareau-Berthet, N |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 19 18 3734

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2020

| Patent document cited in search report | | Publication date | Patent family member(s) | | Publication date |
|---|---|---|---|---|---|
| US 2018314247 | A1 | 01-11-2018 | US<br>US | 10101745 B1<br>2019220462 A1 | 16-10-2018<br>18-07-2019 |
| US 2014358353 | A1 | 04-12-2014 | CN<br>EP<br>FR<br>KR<br>US<br>WO | 104054034 A<br>2791749 A1<br>2984254 A1<br>20140104018 A<br>2014358353 A1<br>2013087514 A1 | 17-09-2014<br>22-10-2014<br>21-06-2013<br>27-08-2014<br>04-12-2014<br>20-06-2013 |
| US 2019147372 | A1 | 16-05-2019 | NONE | | |
| US 2018136000 | A1 | 17-05-2018 | US<br>US<br>US | 2018136000 A1<br>2018136656 A1<br>2018137373 A1 | 17-05-2018<br>17-05-2018<br>17-05-2018 |

EPO FORM P0459

For more details about this annex : see Official Journal of the European Patent Office, No. 12/82